# EUROPEAN PATENT APPLICATION

(11) **EP 4 083 120 A1**
(43) Date of publication of application: **02.11.2022**
(21) Application number: 20904707.5
(22) Date of filing: 24.12.2020
(51) Int. Cl.: C08J 5/24, B29C 70/06

(54) **PREPREG, FIBER-REINFORCED COMPOSITE MATERIAL, AND METHOD FOR MANUFACTURING FIBER-REINFORCED COMPOSITE MATERIAL**

(30) Priority: 27.12.2019 JP 2019237641
(71) Applicant: Mitsubishi Chemical Corporation, Chiyoda-ku Tokyo 100-8251 (JP)
(72) Inventor: NOHARA Atsushi, Tokyo 100-8251 (JP)
(74) Representative: Hoffmann Eitle
(86) International application number: PCT/JP2020/048455
(87) International publication number: WO 2021/132464

(57) **Abstract**

The present invention provides a prepreg from which a fiber-reinforced composite article in which interlayer peeling at the time of a point impact is suppressed can be obtained; a fiber-reinforced composite article having excellent resistance at the time of a point impact; and a manufacturing method thereof.

In the prepreg of the present invention, a projected area of a damaged portion of a cured product obtained by curing the prepreg of the present invention under specific curing conditions that is measured by a specific test 1 is 400 mm² or less, and a maximum value of tan δ of the cured product that is measured by a specific test 2 is observed at 100°C or higher; the prepreg of the present invention contains a reinforcing fiber substrate, an epoxy resin composition, and a polymer (C2), in which the polymer (C2) is present on an outermost surface of the prepreg, and a glass transition temperature of the polymer (C2) that is observed under specific measurement conditions is 10°C or lower; the method for manufacturing a fiber-reinforced composite article of the present invention includes heat-molding the prepreg of the present invention.

## Description

### [Technical Field]

The present invention relates to a prepreg, a fiber-reinforced composite article, and a method for manufacturing a fiber-reinforced composite article.

Priority is claimed on Japanese Patent Application No. 2019-237641, filed December 27, 2019, the content of which is incorporated herein by reference.

### [Background Art]

Fiber-reinforced composite articles are lightweight and have a high strength and high rigidity and are thus in wide use in the sports field, the leisure field, the automobile field, the aircraft field, other general industrial fields, and the like. Recently, in the automobile field, the aircraft field, and the like, fiber-reinforced composite articles that are particularly lightweight and have a high strength and high rigidity have been in use.

Fiber-reinforced composite articles are a material comprising a reinforcing fiber and a matrix resin as constituent elements. Fiber-reinforced composite articles are an anisotropic material in which the strength and the elastic modulus are extremely high against stress that is applied along the fiber axial direction in the reinforcing fiber, but the strength and the elastic modulus are low against stress that is applied perpendicular to the fiber axial direction.

Fiber-reinforced composite articles are manufactured by, for example, laminating and molding prepregs impregnated with an uncured thermosetting resin composition on a reinforcing fiber substrate and curing the thermosetting resin composition by heating. In the manufacturing of a fiber-reinforced composite article, the physical properties of the fiber-reinforced composite article in each direction are controlled by using a prepreg in which a woven fabric of reinforcing fibers is used as a reinforcing fiber substrate or disposing and laminating a plurality of prepregs in which reinforcing fibers disposed in one direction are used as a reinforcing fiber substrate such that the fiber axial directions become different directions.

However, in a fiber-reinforced composite article manufactured by laminating a plurality of prepregs, there are cases where, in the vicinity of the surface of the laminated prepregs, the proportion of reinforcing fibers in an interlayer region mainly comprising a matrix resin is small and the orientations of the reinforcing fibers are different on both sides of the interlayer region. Therefore, when an impact is applied from the outside, stress concentrates particularly on the interlayer region of the fiber-reinforced composite article. The fracture of this interlayer region may act as the origin of the overall fracture of the fiber-reinforced composite article.

Therefore, even when the strengths of the reinforcing fibers are improved, it is not possible to drastically improve dynamic mechanical strengths such as resistance to, particularly, impacts from the outside as long as the fracture of the interlayer region is not suppressed. In order to solve such a problem, there have been proposed methods in which a variety of particles of a thermoplastic resin and the like is unevenly distributed between layers (for example, Patent Documents 1 and 2).

Patent Document 1 discloses a prepreg in which core-shell rubber particles are disposed on the surface layer of the prepreg. As the core-shell rubber, a soft rubber is used for the core, and a hard resin is used for the shell, whereby it is possible to prevent dissolution in epoxy resins. The use of this core-shell rubber makes it possible to prevent a difference in the degree of formation of interlayer morphology attributed to a difference in curing conditions and a fluctuation in the degree of impact resistance attributed to the difference in the degree of formation of interlayer morphology.

In addition, Patent Document 2 discloses a prepreg in which two types of particles having different particle sizes, each type of the particles having a glass transition temperature of 80°C or higher, are disposed in the surface layer of the prepreg.

### [Citation List]

### [Patent Documents]

[Patent Document 1] Japanese Unexamined Patent Application, First Publication No. H9-25393
[Patent Document 2] Japanese Unexamined Patent Application, First Publication No. 2014-145003

### [Summary of Invention]

### [Technical Problem]

Regarding laminates in which interlayer reinforcing particles are used, when a resin having a high elastic modulus as used in the examples of Patent Document 1 is used as the shell of the core-shell structure particles and when particles having a high glass transition temperature as used in the examples of Patent Document 2 are used, there are cases where the resistance to point impacts is not sufficient. That is, there are cases where the reinforcing particles do not absorb the impact energy, cracks also propagate widely in the fiber direction along the interfaces between the matrix resin and the particles, which are particularly vulnerable, in the laminates, the interfaces between the particles and the matrix are all divided, the particles peel, and conversely, the impact resistance deteriorates.

The present invention provides a prepreg from which a fiber-reinforced composite article in which interlayer peeling at the time of a point impact is suppressed can be obtained; a fiber-reinforced composite article having excellent resistance at the time of a point impact; and a manufacturing method thereof.

### [Solution to Problem]

One embodiment of the present invention relates to the following [1] to [20].
[1] A prepreg, in which a projected area of a damaged portion of a cured product obtained by curing the prepreg under the following curing conditions that is measured by the following test 1 is 400 mm² or less, and a maximum value of tan δ of the cured product that is measured by the following test 2 is observed at 100°C or higher.
   Curing conditions: The prepregs are laminated in a constitution of "+45/0/-45/90" 4s and cured at 0.6 MPa and 150°C for 30 minutes using an autoclave.
   Test 1: A panel made of the cured product is placed, an iron impactor provided with a hemisphere having a radius of 8 mm at a tip is dropped to a center of the panel with a potential energy of 26 J, a damaged portion on the panel that is formed by the dropping is detected at a sound pressure of 22 dB using a transmission-type ultrasonic flaw detector, and an area of the detected damaged portion is measured and regarded as the projected area of the damaged portion.
   Test 2: A storage elastic modulus E' and a loss elastic modulus E" are measured using a dynamic viscoelasticity measuring instrument under conditions of a frequency of 1 Hz, a heating rate of 5 °C/min, and a measurement temperature range of 30°C to 250°C, and a ratio (E"/E') of the loss elastic modulus E" to the storage elastic modulus E' is regarded as the tan δ.
[2] The prepreg according to [1], comprising the following constituent element (A), constituent element (B), and constituent element (C),
   Constituent element (A): Reinforcing fiber substrate,
   Constituent element (B): Epoxy resin composition,
   Constituent element (C): Particles.
[3] The prepreg according to [2], in which the constituent element (C) is present on an outermost surface of the prepreg.
[4] The prepreg according to [2] or [3], in which the constituent element (C) is thermoplastic resin particles.
[5] The prepreg according to any one of [2] to [4], in which the constituent element (C) is particles comprising a polyacrylic acid ester.
[6] The prepreg according to any one of [2] to [5], in which the constituent element (C) is crosslinked body particles of a polyacrylic acid ester.
[7] The prepreg according to any one of [2] to [6], in which a median value (D50) of a particle size distribution of the particles of the constituent element (C) is 12 µm or more and 21 µm or less.
[8] The prepreg according to any one of [2] to [7], in which the constituent element (B) comprises dicyandiamide.
[9] The prepreg according to any one of [2] to [8], in which the constituent element (B) comprises an epoxy resin, and a glass transition temperature of a cured product of the epoxy resin is -20°C or lower.
[10] The prepreg according to any one of [2] to [9], in which the constituent element (A) is a carbon fiber substrate.
[11] A fiber-reinforced composite article obtained by laminating at least one prepreg according to any one of [1] to [10] and a prepreg.
[12] A prepreg comprising the following constituent element (A), constituent element (B), and constituent element (C2), in which the constituent element (C2) is present on an outermost surface of the prepreg,
   Constituent element (A): Reinforcing fiber substrate,
   Constituent element (B): Epoxy resin composition,
   Constituent element (C2): Polymer having a glass transition temperature of 10°C or lower that is observed under the following measurement conditions,
   Measurement conditions of the glass transition temperature of the constituent element (C2): The prepreg is cut into 100 mm × 100 mm and washed with 50 ml of N-methylpyrrolidone (NMP), and then a washing liquid is filtered with filter paper. After this operation is repeated 5 times with the same filter paper, the filter paper is washed with acetone and dried in an oven at 100°C for 30 minutes. 5 to 10 mg of a residue is removed from the filter paper and scanned by differential scanning calorimetry (DSC) from -50°C to 300°C at 10 °C/min, and an onset value at which a baseline changes is regarded as the glass transition point.
[13] The prepreg according to [12], in which the constituent element (C2) comprises a polyacrylic acid ester.
[14] The prepreg according to [12] or [13], in which the constituent element (C2) is particles, and the particles are unevenly distributed on the outermost surface of the prepreg.
[15] The prepreg according to any one of [12] to [14], in which the constituent element (C2) is crosslinked body particles.
[16] The prepreg according to any one of [12] to [15], in which the constituent element (A) is a carbon fiber substrate.
[17] The prepreg according to any one of [12] to [16] that is for a tubular body.
[18] A tubular body obtained by curing the prepreg according to any one of [12] to [16].
[19] A method for manufacturing a fiber-reinforced composite article, including heat-molding a prepreg comprising the following constituent element (A), constituent element (B), and constituent element (C2) at 100°C or higher and 150°C or lower,
   Constituent element (A): Reinforcing fiber substrate,
   Constituent element (B): Epoxy resin,
   Constituent element (C2): Polymer having a glass transition temperature of 10°C or lower that is observed under the following measurement conditions,
   Measurement conditions of the glass transition temperature of the constituent element (C2): The prepreg is cut into 100 mm × 100 mm and washed with 50 ml of N-methylpyrrolidone (NMP), and then a washing liquid is filtered with filter paper. After this operation is repeated 5 times with the same filter paper, the filter paper is washed with acetone and dried in an oven at 100°C for 30 minutes. 5 to 10 mg of a residue is removed from the filter paper and scanned by differential scanning calorimetry (DSC) from -50°C to 300°C at 10 °C/min, and an onset value at which a baseline changes is regarded as the glass transition point.
[20] The method for manufacturing a fiber-reinforced composite article according to [19], in which a method for molding the prepreg is internal pressure molding, autoclave molding, or press molding.

### [Advantageous Effects of Invention]

According to the present invention, it is possible to provide a new fiber-reinforced composite article having sufficient heat resistance as a fiber-reinforced composite article and also having excellent durability at the time of an impact, a prepreg for manufacturing the fiber-reinforced composite article, and a fiber-reinforced composite article.

### [Description of Embodiments]

Hereinafter, a prepreg, a fiber-reinforced composite article, and a method for manufacturing the same according to one embodiment of the present invention will be described in more detail.

The definitions of the following terms apply throughout the present specification and claims.
"Fiber-reinforced composite article" means an article obtained by laminating prepregs and then reaction-curing or solidifying the resin component by heating or the like.
"Epoxy resin" means a compound having a glycidyl group in the molecule and a resin having a glycidyl group.
"Thermoplastic resin" means a resin that softens at the glass transition temperature or higher or at the melting point or higher.
"Glass transition temperature" is the onset value of the storage elastic modulus E' obtained by a bending mode DMA in accordance with ASTM D7028.
"to" indicating a numerical range means that the numerical values described before and after "to" are included as the lower limit value and the upper limit value.

### <Prepreg>

In the prepreg according to one of the embodiments, the projected area of a damaged portion of a cured product obtained by curing the prepreg under the following curing conditions that is measured by the following test 1 is 400 mm² or less, and the maximum value of tan δ of the cured product measured by the following test 2 is observed at 100°C or higher.

Curing conditions: The prepregs are laminated in a constitution of "+45/0/-45/90" 4s and cured at 0.6 MPa and 150°C for 30 minutes using an autoclave.

Test 1: A panel made of the cured product obtained under the above-described curing conditions is placed, an iron impactor provided with a hemisphere having a radius of 8 mm at the tip is dropped to the center of the panel with a potential energy of 26 J, a damaged portion on the panel that is formed by the dropping is detected at a sound pressure of 22 dB using a transmission-type ultrasonic flaw detector, and the area of the detected damaged portion is measured and regarded as the projected area of the damaged portion.

Test 2: The storage elastic modulus E' and the loss elastic modulus E" are measured using a dynamic viscoelasticity measuring instrument under conditions of a frequency of 1 Hz, a heating rate of 5 °C/min, and a measurement temperature range of 30°C to 250°C. A temperature at which the ratio (E"/E' = tan δ) of the loss elastic modulus E" to the storage elastic modulus E' is maximized is observed.

The prepreg preferably comprises the following constituent element (A), constituent element (B), and constituent element (C) from the viewpoint of resistance at the time of a point impact,
Constituent element (A): Reinforcing fiber substrate,
Constituent element (B): Epoxy resin composition,
Constituent element (C): Particles.

In the prepreg according to one of the embodiments, the prepreg comprises the following constituent element (A), constituent element (B), and constituent element (C2), and the constituent element (C2) is present on the outermost surface of the prepreg,
Constituent element (A): Reinforcing fiber substrate,
Constituent element (B): Epoxy resin composition,
Constituent element (C2): Polymer having a glass transition temperature of 10°C or lower that is observed under the following measurement conditions,
Measurement conditions of the glass transition temperature: The prepreg is cut into 100 mm × 100 mm and washed with 50 ml of N-methylpyrrolidone (NMP), and then a washing liquid is filtered with filter paper. After this operation is repeated 5 times with the same filter paper, the filter paper is washed with acetone and dried in an oven at 100°C for 30 minutes. 5 to 10 mg of a residue is removed from the filter paper and scanned by differential scanning calorimetry (DSC) from -50°C to 300°C at 10 °C/min, and an onset value at which a baseline changes is regarded as the glass transition point.

The projected area S of the damaged portion that is obtained by the test 1 is 400 mm² or less. The projected area S is preferably 350 mm² or less and more preferably 300 mm² or less since it is possible to use the prepreg as a structural member of mobile objects. From the viewpoint of maintaining rigidity necessary for structural members for mobile objects, the projected area S is preferably 20 mm² or more and more preferably 50 mm² or more.

The value of this projected area S can also be said as the index of the impact resistance of the constituent element (C) or the constituent element (C2). When the projected area S is small, and an object collides with a fiber-reinforced composite article, in the fiber-reinforced composite article, the kinetic energy of the object is likely to be converted into the deformation energy of the particles and returned to the restoration energy again. For example, when used for a bat, a racket, or the like, a fiber-reinforced composite article that is obtained from the prepreg is considered to contribute to improvement in the flight distance of batted balls and realization of a soft feeling of hitting.

As the constituent element (C) and the constituent element (C2), particles having a low Tg (glass transition temperature) and a low elastic modulus, for example, a crosslinked body of a polyacrylic acid ester or a block copolymer of dissimilar polyamides, are preferably used.

In addition, a polyamide that has undergone a hydrophilic surface treatment can also be used from the viewpoint of suppressing the interfacial propagation of cracks. When the constituent element (C) is used, the value of S can be decreased by adding an epoxy resin comprising a component exhibiting rubber elasticity to the constituent element (B) while using particles having a low Tg and a low elastic modulus or a polyamide that has undergone a hydrophilic surface treatment.

When the constituent element (A) is impregnated with the constituent element (B) and the constituent element (C) or the constituent element (C2), the constituent element (C) or the constituent element (C2) is filtered by (A), and the constituent element (C) or the constituent element (C2) can be unevenly distributed on the surface of the prepreg. When a plurality of pieces of prepregs is laminated and cured, and a surface perpendicular to the fiber direction is polished and then observe with a microscope, if particles or a fused substance of the particles can be confirmed between the layers of the prepregs, it can be said that the constituent element (C) or the constituent element (C2) is present on the surfaces of the prepregs. When a laminate is molded by laminating the prepregs in which the constituent element (C) or the constituent element (C2) is unevenly distributed on the surface of the constituent element (A) and the constituent element (A) is impregnated with the constituent element (B) and a part of the constituent element (C) or the constituent element (C2), a fiber-reinforced composite article in which the constituent element (C) or the constituent element (C2) is unevenly distributed between the prepreg layers can be obtained.

As a result, it is possible to impart excellent resistance at the time of a point impact to the fiber-reinforced composite article. For example, it is particularly preferable to use a fiber-reinforced composite article as a tubular body because the coefficient of restitution of tools used in sports applications is improved.

### (Curing conditions)

The prepreg is cut into 350 mm × 350 mm, and the cut prepregs are laminated in a configuration of "+ 45/0/- 45/90" 4s, thereby producing a prepreg laminate having a thickness of 4 to 6 mm. The prepreg laminate is covered with a nylon film, subjected to a vacuum bag treatment, next, heated from room temperature up to 150°C at a heating rate of 4 °C/min using an autoclave, and maintained in a state of 150°C for 20 minutes. After that, the prepreg laminate is slowly cooled in the autoclave until the temperature becomes 50°C or lower, thereby producing an evaluation molded plate made of a cured product of the prepreg. From the start of heating to the end of heating, the pressure in the autoclave is set to 0.6 MPa.

### (Test 1)

A 150 mm × 100 mm test piece is cut out from the evaluation molded plate, and diagonal lines are drawn on the surface of the test piece. The test piece is placed still in an instrumented impact tester such that the intersection of the diagonal lines drawn on the test piece comes directly below an impactor. An iron impactor provided with a hemisphere having a radius of 8 mm at the tip is set such that the potential energy becomes 26 J, and the iron impactor is dropped to the center of the test piece. The test piece is left to stand in a water tank, the test surface is irradiated with ultrasonic waves having a sound pressure of 22 dB, and a damaged portion is detected by a transmission method. The damaged portion is projected, and the area thereof is measured and regarded as the projected area S of the damaged portion.

### (tan δ)

For the cured product of the prepreg cured under the above-described curing conditions, the maximum value of tan δ measured by the following test 2 is observed at 100°C or higher. The temperature at which the maximum value of tan δ is observed is more preferably 110°C or higher and still more preferably 120°C or higher since the prepreg can be used as a structural member for moving bodies. From the viewpoint of satisfying both the heat resistance and the impact resistance, the temperature is preferably 200°C or lower and more preferably 180°C or lower.

### (Test 2)

The storage elastic modulus E' and the loss elastic modulus E" are measured using a dynamic viscoelasticity measuring instrument under conditions of a frequency of 1 Hz, a heating rate of 5 °C/min, and a measurement temperature range of 30°C to 250°C. A temperature at which the ratio (E"/E' = tan δ) of the loss elastic modulus E" to the storage elastic modulus E' is maximized is observed.

When a plurality of peaks of tan δ is observed at the time of measuring the tan δ of the cured product, the temperature for the peak of the larger tan δ value is specified as the observation temperature of the maximum value of tan δ. When a plurality of peaks with the same value is observed, the temperature for the peak on the low temperature side is specified as the observation temperature of the maximum value of tan δ.

The glass transition temperature of the cured product of the prepreg is preferably 90°C or higher. The glass transition temperature is more preferably 100°C or higher and still more preferably 110°C or higher since the prepreg is applicable to a structural member for mobile objects. From the viewpoint of satisfying both the impact resistance, the glass transition temperature is preferably 190°C or lower and more preferably 170°C or lower.

As the glass transition temperature of the cured product of the prepreg, the onset value of the storage elastic modulus E' obtained by a bending mode DMA in accordance with ASTM D7028 can be used.

### (Constituent element (A))

The constituent element (A) is a reinforcing fiber substrate, and the reinforcing fiber substrate may be a substrate in which reinforcing fibers are arranged in one direction or a substrate in which reinforcing fibers are arranged in random directions.

Examples of the form of the constituent element (A) include a sheet in which woven fabrics or nonwoven fabrics of reinforcing fibers or long fibers of reinforcing fibers are aligned in one direction and the like.

The constituent element (A) is preferably a sheet made of a bundle of reinforcing fibers in which long fibers are aligned in one direction since it is possible to mold a fiber-reinforced composite article having a high specific strength and a high specific elastic modulus and is preferably a woven fabric of reinforcing fibers since handling is easy.

The reinforcing fibers may be long fibers, and the long fibers may have a strand shape. In addition, the reinforcing fibers may be in a crushed state (milled reinforcing fibers) or in a state in which long fibers or strands thereof are cut (chopped reinforcing fibers).

Examples of the material of the reinforcing fiber include glass fibers, carbon fibers (including graphite fibers), aramid fibers, boron fibers, and the like. The reinforcing fiber substrate is preferably a carbon fiber substrate from the viewpoint of the mechanical properties and weight reduction of a fiber-reinforced composite article.

The tensile strength of the carbon fiber in accordance with JIS (Japanese Industrial Standards) R 7601 is preferably 3500 MPa or more, more preferably 4000 MPa or more, and still more preferably 4500 MPa or more.

For example, as a structural material for aircrafts, the carbon fiber that is used in the fiber-reinforced composite article preferably has a high tensile strength, and the tensile strength of the carbon fiber in accordance with JIS R 7601 is preferably 4500 MPa or more, more preferably 5000 MPa or more, and still more preferably 5500 MPa or more.

The fiber diameter of the carbon fiber is preferably 4 µm or more and more preferably 5 µm or more. In addition, the fiber diameter of the carbon fiber is preferably 10 µm or less and more preferably 8 µm or less. When the fiber diameter of the carbon fiber is 4 µm or more, in a process for working the carbon fibers, for example, combing, rolling, or the like, it is less likely that the carbon fibers move laterally and rub against each other or, when the carbon fibers and the roll surface or the like rub against each other, the carbon fibers are cut or become frizzy. Therefore, it is possible to preferably manufacture a fiber-reinforced composite article having a stable strength. In addition, when the fiber diameter of the carbon fiber is 10 µm or less, it is possible to manufacture the carbon fiber by a normal method. The number of carbon fibers in the bundle of the carbon fibers is preferably 1,000 to 60,000.

### (Constituent element (B))

The constituent element (B) is an epoxy resin composition. The constituent element (B) preferably comprises a resin that constitutes the matrix in a fiber-reinforced composite article and a curing agent. The epoxy resin composition preferably comprises an epoxy resin as the resin that constitutes the matrix and dicyandiamide and/or a urea compound as the curing agent. The constituent element (B) may further comprise different components other than the epoxy resin and the curing agent.

As the epoxy resin, an arbitrary epoxy resin can be used. Examples of the epoxy resin include a bisphenol A type epoxy resin, a bisphenol F type epoxy resin, an epoxy resin having an oxazolidone ring skeleton, a novolac type epoxy resin, triglycidyl aminophenol, tetraglycidyl diaminodiphenylmethane, a hydrophthalic acid type epoxy resin, a bisphenol S type epoxy resin, a resorcin type epoxy resin, a hydroquinone type epoxy resin, a bisphenoloxyethanol fluorene type epoxy resin, a bisphenol fluorene type epoxy resin, a biscresol fluorene type epoxy resin, and the like.

Among these, one or more epoxy resins selected from the group consisting of a bisphenol A type epoxy resin, a bisphenol F type epoxy resin, an epoxy resin having an oxazolidone ring skeleton, a novolac type epoxy resin, triglycidyl aminophenol, and tetraglycidyl diaminodiphenylmethane is preferable. It is also possible to jointly use liquid and solid epoxy resins. A bisphenol A type epoxy resin is preferable from the viewpoint of enhancing the toughness of the cured product of the constituent element (B).

The liquid epoxy resin is an epoxy resin that is liquid at 25°C. The liquid epoxy resin mainly contributes to improvement in the solubility of thermoplastic resins and the strength, elastic modulus, and heat resistance of the cured product of the epoxy resin composition. Here, "liquid" means that the epoxy resin exhibits fluidity.

The viscosity of the epoxy resin that is liquid at 25°C is preferably 500 Pa·s or less and more preferably 300 Pa·s or less at 25°C. In addition, the viscosity is preferably 0.1 Pa·s or more.

Examples of the commercially available products of a bisphenol A type epoxy resin that is liquid at 25°C include jER (registered trademark) 828 manufactured by Mitsubishi Chemical Corporation, D. E. R. 331 manufactured by The Dow Chemical Company, EPOTOHTO YD-128 manufactured by Nippon Steel Chemical & Material Co., Ltd., EPICLON 850 manufactured by DIC Corporation, and the like.

Examples of the commercially available products of bisphenol A type epoxy resin that is solid at 25°C include jER (registered trademark) 1001, jER (registered trademark) 1002, jER (registered trademark) 1003, and jER (registered trademark) 1004 manufactured by Mitsubishi Chemical Corporation, EPOTOHTO YD-903 manufactured by Nippon Steel Chemical & Material Co., Ltd., EPICLON 1050, EPICLON 2050, EPICLON 3050, and EPICLON 4050 manufactured by DIC Corporation, and the like.

The constituent element (B) preferably comprises an epoxy resin having an oxazolidone ring skeleton and an epoxy resin having a skeleton exhibiting rubber elasticity in the main chain for the purpose of further enhancing the impact resistance. The epoxy resin having a skeleton exhibiting rubber elasticity in the main chain is preferably an epoxy resin having an ether bond and having an alkylene structure, and examples of the commercially available products include YX7400 from Mitsubishi Chemical Corporation. Examples of the commercially available products of the epoxy resin having an oxazolidone ring skeleton include EPICLON TSR-400 from DIC Corporation, EPOTOHTO YD-952 from Nippon Steel Chemical & Material Co., Ltd., D. E. R. 858 manufactured by The Dow Chemical Company, LSA3301 from Asahi Kasei Microdevices Corp, and the like. The content of the epoxy resin having an oxazolidone ring skeleton or the epoxy resin having a skeleton exhibiting rubber elasticity in the main chain is preferably 1% by mass or more and 40% by mass or less with respect to 100% by mass of the epoxy resin composition.

The content of the epoxy resin in the constituent element (B) is preferably 60% by mass or more and more preferably 70% by mass or more with respect to 100% by mass of the epoxy resin composition. From the viewpoint of imparting sufficient impact resistance, the content of the epoxy resin in the constituent element (B) is preferably 90% by mass or less and more preferably 80% by mass or less with respect to 100% by mass of the epoxy resin composition.

The curing agent is not particularly limited. Examples thereof include dicyandiamide, urea compounds, imidazoles, aromatic amines, other amine-based curing agents, acid anhydrides, boron chloride amine complexes and the like. Among these, at least one curing agent selected from the group consisting of dicyandiamide, urea compounds, imidazoles, and aromatic amines is preferable. The curing agent for the epoxy resin is preferably dicyandiamide or urea compounds. When dicyandiamide and urea compounds are jointly used, it is possible to cure the constituent element (B) even at a low temperature of 150°C or lower.

The content of dicyandiamide is preferably 3% by mass or more and more preferably 4% by mass or more with respect to 100% by mass of the epoxy resin composition. In addition, the content of dicyandiamide in the constituent element (B) is preferably 10% by mass or less and more preferably 7% by mass or less with respect to 100% by mass of the epoxy resin composition. When the content of dicyandiamide is 3% by mass or more, it is possible to sufficiently cure the epoxy resin and to obtain a cured product having higher heat resistance. When the content of dicyandiamide is 10% by mass or less, it is possible to suppress stress concentration and moisture absorption attributed to excessive dicyandiamide and to obtain a cured product having higher toughness and a small amount of moisture absorbed.

Examples of the commercially available products of dicyandiamide include DICY7 and DICY15 from Mitsubishi Chemical Corporation, Dyhard (registered trademark) 100s from Alzchem Group AG, DICYANEX1400F from Air Products and Chemical, Inc., and the like.

Urea compounds contribute to the promotion of the reaction between the epoxy resin and dicyandiamide. As the urea compound, an aromatic urea compound is preferable from the viewpoint of improving the storage stability of the epoxy resin composition and improving the heat resistance of the cured product. Examples of the aromatic urea compound include N,N-dimethyl-N'-(3,4-dichlorophenyl)urea, toluenebis(dimethylurea), 4,4'-methylenebis(phenyldimethylurea), 3-phenyl-1,1-dimethylurea, and the like.

Examples of the commercially available products of the aromatic urea compounds include DCMU99 from Hodogaya Chemical Co., Ltd., OMICURE (registered trademark) 24, OMICURE (registered trademark) 52, and OMICURE (registered trademark) 94 from PTI Japan, and the like. The content of the urea compound is preferably 0.5% by mass or more and more preferably 1% by mass or more with respect to 100% by mass of the epoxy resin composition. In addition, the content of the urea compound is preferably 7% by mass or less and more preferably 5% by mass or less with respect to 100% by mass of the epoxy resin composition.

### (Different components)

Examples of the different components that the constituent element (B) may further comprise include a variety of arbitrary additives. In the case of particles, examples of the additives include thermoplastic resins, elastomer fine particles, core-shell type elastomer fine particles, diluents, inorganic particles (silica and the like), carbonaceous components (carbon nanotubes and the like), flame retardants (phosphorus compounds and the like), defoaming agents, and the like that are different from the constituent element (C) or the constituent element (C2). The additives are preferably any of a thermoplastic resin or core-shell type elastomer fine particles since the toughness is improved without degrading the heat resistance of the cured product of the constituent element (B), and it is possible to suppress the outflow of a large amount of the epoxy resin composition from the prepreg at the time of adjusting the viscosity of the epoxy resin composition and the molding of the epoxy resin composition.

Examples of the thermoplastic resin include polyether sulfone, polyvinyl formal, phenoxy resins, acrylic block copolymers, and the like.

Examples of the commercially available products of polyether sulfone include ULTRASON (registered trademark) E2020 P SR MICRO from BASF SE, SUMIKAEXCEL PES 5003P from Sumitomo Chemical Co., Ltd., and Virantage (registered trademark) VW-10200RP and VW-10700RP from Solvay.

Examples of the commercially available products of polyvinyl formal include VINYLEC from JNC Corporation.

Examples of the commercially available products of phenoxy resins include PHENOTOTO from Nippon Steel Chemical & Material Co., Ltd., PKHB, PKHC, and PKHH from InChem Corp., and the like.

Examples of the commercially available products of acrylic block copolymers include NANOSTRENGTH (registered trademark) series such as NANOSTRENGTH (registered trademark) M52N and M22 from Arkema.

While the constituent element (C) has a shape as particles in the epoxy resin composition, these thermoplastic resins as the different components (excluding the constituent element (C)) are preferably dissolved in the epoxy resin in the epoxy resin composition and in a uniform state.

### (Method for preparing constituent element (B))

The constituent element (B) can be prepared by a variety of arbitrary methods. Examples of the method for preparing the constituent element (B) include methods in which the individual components of the epoxy resin composition are heated and kneaded with a planetary mixer, a kneader, or the like.

Dicyandiamide, the aromatic urea compound, or the like as the curing agent is a particulate component and, possibly, aggregates and poorly disperses. Therefore, it is preferable to preliminarily knead the particulate component into a liquid epoxy resin to form a masterbatch. In the preliminary kneading, a kneading device such as a three-roll mill or a ball mill is preferably used.

For example, the formation of a masterbatch of the particulate curing agent in advance makes it possible to suppress the uneven physical properties and poor curing of the constituent element (B) in the cured product due to the poor dispersion of the curing agent and poor impregnation of the constituent element (A) with the constituent element (B). From the viewpoint of reducing the origins of fracture attributed to the dispersion uniformity of a solid content, the mass proportion of the content of the curing agent to the content of the constituent element (C) or the constituent element (C2) (curing agent/constituent element (C) or constituent element (C2)) is preferably 0.1 or more and more preferably 0.25 or more. In addition, the mass proportion is preferably 0.5 or less and more preferably 0.4 or less.

### (Constituent element (C) and constituent element (C2))

The constituent element (C) is particles. As the particles, inorganic particles or organic particles can be used. The shape of the particle is not particularly limited and may be a sphere, a spheroid, a triangular prism, a rectangular parallelepiped, a cone, or the like.

Examples of the inorganic particles include silica, carbon black, metal oxides, and metal hydroxides. As the organic particles, for example, thermoplastic resin particles and thermosetting resin particles can be used.

The constituent element (C2) is a polymer having a glass transition temperature of 10°C or lower that is observed under the above-described measurement conditions. From the viewpoint of the toughness, the constituent element (C2) is preferably particles. The constituent element (C) and the constituent element (C2) are preferably thermoplastic resin particles. From the viewpoint of the impact resistance when a fiber-reinforced composite article has been produced, the amount of the constituent element (C) or the constituent element (C2) present on the surface of the prepreg is preferably 60% by mass or more, more preferably 70% by mass or more, still more preferably 80% by mass or more, and particularly preferably 90% by mass or more of the total amount of the constituent element (C) or the constituent element (C2). Some of the constituent element (C) or the constituent element (C2) enters a layer constituted with the constituent element (A). Therefore, the amount of the constituent element (C) or the constituent element (C2) present on the surface of the prepreg is 100% by mass or less of the total amount of the constituent element (C) or the constituent element (C2).

Examples of the thermoplastic resin particles include polyamide, polyurethane, polyether sulfone, polyvinylformal, phenoxy resins, polymethacrylic acid ester, polyacrylic acid ester, acrylic block copolymers, and the like. Among these, polyacrylic acid ester is preferable from the viewpoint of excellent impact resistance.

Examples of the types of the polyacrylic acid ester include methyl polyacrylate, butyl polyacrylate, pentyl polyacrylate, hexyl polyacrylate, and the like. Examples of the commercially available products of the polyacrylic acid ester include ARX15, ARX30, ABX8, ABX20, AFX8, AFX15, and AFX30 (manufactured by Sekisui Kasei Co., Ltd.). Above these, a crosslinked body of polyacrylic acid ester is preferable from the viewpoint of the resistance at the time of a point impact and the solvent resistance. The crosslinked body refers to a body in which ester structure portions of the side chains chemically bond to each other and which does not become fluid after falling into a rubber state over the glass transition temperature when heated.

### (Glass transition temperature of constituent element (C) or constituent element (C2))

The glass transition temperature of the constituent element (C) or the constituent element (C2) is preferably 0°C or lower, more preferably -10°C or lower, and still more preferably -20°C or lower. The constituent element (C) or the constituent element (C2) is preferably in a rubber state in a temperature range where a fiber-reinforced composite article is used (which is determined, for example, within a range of -15°C to 40°C determined depending on uses). The glass transition temperature of the constituent element (C) or the constituent element (C2) is preferably -80°C or higher since it becomes possible for the constituent element (C) or the constituent element (C2) to be present as solid particles at room temperature. When the glass transition temperature is 10°C or lower, the elastic modulus does not change significantly in a normal usage environment, and the impact resistance does not change often depending on the usage environment. In addition, when the glass transition temperature becomes 40°C or higher, the particles fall in a glass state in a normal usage environment.

When the constituent element (C) or the constituent element (C2) is specified in the prepreg, the prepreg is cut into 100 mm × 100 mm and washed with 50 ml of N-methylpyrrolidone (NMP), and then the washing liquid is filtered with filter paper. After this operation is repeated 5 times with the same filter paper, the filter paper is washed with acetone and dried in an oven at 100°C for 30 minutes. It is preferable to remove 5 to 10 mg of a residue from the filter paper, scan the residue by differential scanning calorimetry (DSC) from -50°C to 300°C at 10°C/min, and determine the glass transition point in accordance with JIS K7121.

### (Particle size distribution of particles)

Regarding the particle size distribution of the constituent element (C) or the constituent element (C2), it is preferable that D25 is 7 to 15 µm, the median value (D50) is 12 to 21 µm, and D75 is 15 to 23 µm. When the D25 of the constituent element (C) or the constituent element (C2) is within a range of 7 to 15 µm, it is possible to make the constituent element (C) less likely to enter the constituent element (A) when the prepreg and a fiber-reinforced composite article are manufactured. Therefore, it is possible to cause the constituent element (C) or the constituent element (C2) to be present between the layers of the constituent element (A) at a high frequency. As a result, it is possible to impart excellent impact resistance to the fiber-reinforced composite article. When D75 of the constituent element (C) or the constituent element (C2) is within a range of 15 to 23 µm, it is possible to suppress the deterioration of the mechanical properties of a fiber-reinforced composite article. Furthermore, in the manufacturing of the prepreg, it is possible to prevent the occurrence of clogging in facilities such as a roll coater or a die coater when a mixture of the constituent element (B) and the constituent element (C) or the constituent element (C2) is applied to the surface of a release paper in a uniform thickness. When the median value (D50) and the mode value are 12 to 21 µm, it is possible to enhance a crack spread prevention effect of the particles that receive energy that is generated by an impact and are fractured for themselves.

The particle size distribution of the constituent element (C) or the constituent element (C2) can be acquired by, for example, a laser diffraction/scattering method.

The fiber areal weight (the content of reinforcing fibers per square meter: FAW) of the prepreg may be appropriately set depending on the uses of the prepreg and is, for example, 50 to 250 g/m².

The content of a matrix resin in the prepreg is defined as the total of the content of the constituent element (B) and the content of the constituent element (C) or the constituent element (C2). The content of the matrix resin in the prepreg is preferably 25% by mass or more, more preferably 30% by mass or more and preferably 50% by mass or less and more preferably 45% by mass or less with respect to 100% by mass of the prepreg. When the content of the matrix resin in the prepreg is the lower limit value or more of the above-described range, it is possible to sufficiently impart the impact resistance. Furthermore, it is also possible to suppress the deterioration of the static mechanical properties of a fiber-reinforced composite article attributed to the lack of the constituent element (B) in the fiber-reinforced composite article. When the content of the matrix resin in the prepreg is the upper limit value or less of the above-described range, it is possible to prevent the deterioration of the static mechanical properties of a fiber-reinforced composite article accompanied by a decrease in Vf (the volume rate of the reinforcing fiber substrate in the fiber-reinforced composite article) that is attributed to an excessive rate of the constituent element (B) and the constituent element (C) or the constituent element (C2).

The content of the constituent element (C) or the constituent element (C2) in the prepreg is preferably 5% by mass or more and more preferably 10% by mass or more with respect to a total of 100% by mass of the constituent element (B) and the constituent element (C) or the constituent element (C2). In addition, the content of the constituent element (C) or the constituent element (C2) in the prepreg is preferably 30% by mass or less and more preferably 25% by mass or less with respect to a total of 100% by mass of the constituent element (B) and the constituent element (C) or the constituent element (C2). When the content of the constituent element (C) or the constituent element (C2) is the lower limit value or more of the above-described range, the amount of the constituent element (C) or the constituent element (C2) that is unevenly distributed in the interlayer region increases, and it is possible to enhance the impact resistance. If the content of the constituent element (C) is the upper limit value or less of the above-described range, it is possible to suppress an excessive decrease in the proportion of the constituent element (B) to the matrix resin made up of the constituent element (B) and the constituent element (C) or the constituent element (C2), which are contained in the prepreg and to prevent a decrease in the static mechanical strength of a fiber-reinforced composite article that is attributed to the lack of the constituent element (B).

### (Method for manufacturing prepreg)

As a method for manufacturing the prepreg, a method (α) to be described below is preferable since it is easy to unevenly distribute the constituent element (C) or the constituent element (C2) in the interlayer region that is formed between the constituent elements (A), and it is possible to employ the same method as an ordinary method for manufacturing a prepreg, which prevents an increase in the manufacturing costs.

The method (α) is a method in which a resin film (D) produced by using a film coater for thinly spreading a mixture (BC) comprising the constituent element (C) or the constituent element (C2) kneaded into the constituent element (B) is attached to a single surface or both surfaces of the constituent element (A) and the constituent element (A) is impregnated with the constituent element (B). In the method (α), the constituent element (C) is filtered by the constituent element (A) when the constituent element (A) is impregnated with the constituent element (B) and is unevenly distributed in the vicinity of the surface of the prepreg.

### (Heat-molding)

The temperature at the time of heat-molding the laminated prepregs is preferably 100°C or higher and more preferably 110°C or higher and preferably 150°C or lower and more preferably 140°C or lower from the viewpoint of the performance of a facility that is used for heat-molding, the properties of an auxiliary material, and the characteristics of a fiber-reinforced composite article to be obtained. When the temperature at the time of heat-molding is 100°C or higher, it is possible to sufficiently cure the constituent element (B) and to manufacture a fiber-reinforced composite article having high heat resistance. When the temperature at the time of heat-molding is 150°C or lower, it is possible to use an oven having ordinary specifications and to use steam as a heat medium. In addition, from the viewpoint of maintaining the performance of a fiber-reinforced composite article to be obtained, it is possible to suppress the generation of excessive reaction heat within a short period of time due to the rapid progress of a curing reaction and the subsequent burning of the inside of the fiber-reinforced composite article. Examples of a molding method include autoclave molding, sheet winding molding, press molding, and internal pressure molding. The prepregs of the above-described aspect may be laminated with each other or a prepreg not comprising the constituent element (C) or the constituent element (C2) may be laminated to the prepreg of the above-described aspect.

### <Fiber-reinforced composite article>

A fiber-reinforced composite article according to one of the embodiments of the present invention is a fiber-reinforced composite article obtained by laminating two or more prepregs and heat-curing the laminate. In addition, in a cross section of the fiber-reinforced composite article, a layer in which particles are unevenly distributed between a fiber layer and a fiber layer is present. In the layer in which the particles are unevenly distributed, the cross-sectional shape of the particle may be circular or elliptical or may be amorphous. Examples of a member for which the fiber-reinforced composite article is used include flat plates, hollow members, and the like. Examples of the flat plates include flat plates to which a curved shape, an uneven shape, or the like is imparted (an automobile roof and a hat channel) and the like. Examples of the hollow members include hollow members having a curved portion (a racket and a bicycle wheel), cylindrical tubular bodies (a golf shaft, a fishing rod, and a bat), and a tubular bodies having a polygonal cross section (a bicycle frame).

As other examples of the embodiment, the following «1» to «11» are further disclosed in the present specification. Here, the present invention is not limited to these embodiments.
<<1>> A prepreg comprising the following constituent elements (A), (B), and (C), in which the constituent element (C) is present in a surface layer of the prepreg, a projected area of a damaged portion of a cured product obtained by curing the prepreg under the following curing conditions that is measured by the following test 1 is 400 mm² or less, and a maximum value of tan δ of the cured product measured by the following test 2 is observed at 100°C or higher,
   Constituent element (A): Reinforcing fiber substrate,
   Constituent element (B): Epoxy resin composition,
   Constituent element (C): Particles,
   Curing conditions: The prepregs are laminated in a constitution of "+45/0/-45/90" 4s and cured at 0.6 MPa and 150°C for 30 minutes using an autoclave.
   Test 1: A panel obtained by curing the prepreg is placed still, the damaged portion formed at the time of dropping an iron impactor having a shape with a diameter of 16 mm and R of 8 mm at a tip to a center of the panel with a potential energy of 26 J is detected at a sound pressure of 22 dB using a transmission-type ultrasonic flaw detector, and an area of the detected damaged portion is measured.
   Test 2: A storage elastic modulus E' and a loss elastic modulus E" are measured using a dynamic viscoelasticity measuring instrument under conditions of a frequency of 1 Hz, a heating rate of 5 °C/min, and a measurement temperature range of 30°C to 250°C. A temperature at which a ratio (E"/E' = tan δ) of the loss elastic modulus E" to the storage elastic modulus E' is maximized is observed.
«2» The prepreg according to <<1>>, in which the constituent element (C) is thermoplastic resin particles.
«3» The prepreg according to <<1>> or <<2>>, in which the constituent element (C) is particles comprising a polyacrylic acid ester.
«4» The prepreg according to any one of <<1>> to <<3>>, in which the constituent element (C) is crosslinked body particles of a polyacrylic acid ester.
«5» The prepreg according to any one of <<1>> to <<4>>, in which a median value (D50) of a particle size distribution of the particles of the constituent element (C) is 12 µm or more and 21 µm or less.
«6» The prepreg according to any one of <<1>> to <<5>>, in which the constituent element (B) comprises dicyandiamide.
«7» The prepreg according to any one of <<1>> to <<6>>, in which the constituent element (B) comprises an epoxy resin having a glass transition temperature of -20 ° C or less as a cured product.
«8» The prepreg according to any one of <<1>> to <<7>>, in which the constituent element (A) is a carbon fiber substrate.
«9» A fiber-reinforced composite article obtained by laminating at least one prepreg according to any one of <<1>> to «8» and a prepreg.
«10» A prepreg comprising the following constituent elements (A), (B), and (C3), in which the constituent element (C3) is present in a surface layer of the prepreg,
   Constituent element (A): Reinforcing fiber substrate,
   Constituent element (B): Epoxy resin composition,
   Constituent element (C3): Polyacrylic acid ester particles.
«11» A prepreg comprising the following constituent elements (A), (B), and (C4), in which the constituent element (C4) is present in a surface layer of the prepreg.
   Constituent element (A): Reinforcing fiber substrate
   Constituent element (B): Epoxy resin composition
   Constituent element (C4): Crosslinked body particles

### [Examples]

Hereinafter, the present invention will be specifically described using examples, but the present invention is not limited thereto.

### <Raw materials>

Raw materials used in Examples 1 to 3 and Comparative Examples 1 to 6 are as shown below.

### (Constituent element (A))

- TR50S: Carbon fiber bundle (Mitsubishi Chemical Corporation, PYROFIL (registered trademark) TR50S 15L, strand strength: 4900 MPa, elastic modulus: 240 GPa, fiber diameter of carbon fiber: 6.8 µm, number of carbon fibers: 15000)

### (Constituent element (B))

### [Epoxy resins]

- YD-128: Bisphenol A type liquid epoxy resin (Nippon Steel Chemical & Material Co., Ltd.)
- jER1002: Bisphenol A type solid epoxy resin (Mitsubishi Chemical Corporation)
- YDPN-638: Phenol novolac type semisolid epoxy resin (Nippon Steel Chemical & Material Co., Ltd.)
- YD-952: Epoxy resin having an oxazolidone ring skeleton (Nippon Steel Chemical & Material Co., Ltd.)
- YX7400: Liquid bifunctional epoxy resin (Mitsubishi Chemical Corporation)

### [Curing agents]

- DICY15: Dicyandiamide (Mitsubishi Chemical Corporation, jER CURE (registered trademark) DICY15)
- DCMU99: 3-(3,4-Dichlorophenyl)-1,1-dimethylurea (Hodogaya Chemical Co., Ltd., DCMU99)
- OMICURE 94: Phenyl dimethyl urea (PTI Japan)
- 2MZA-PW: 2,4-Diamino-6-[2'-methylimidazolyl-(1')]-ethyl-s-triazine

### (Shikoku Chemicals Corporation)

### (Constituent element (C))

- ARX15: Crosslinked polyacrylic acid ester (Sekisui Kasei Co., Ltd., glass transition temperature: -26°C, median value of particle size distribution (D50): 15 µm)
- ARX30: Crosslinked polyacrylic acid ester (Sekisui Kasei Co., Ltd., glass transition temperature: -26°C, median value of particle size distribution (D50): 30 µm)

### (Particles other than constituent element (C))

- BM30X-12: Crosslinked polybutyl methacrylate (Sekisui Kasei Co., Ltd., median value of particle size distribution (D50): 12 µm)
- MBX15: Crosslinked polymethyl methacrylate (Sekisui Kasei Co., Ltd., glass transition temperature: 75°C, median value of particle size distribution (D50): 15 µm)
- 2A P0-35: Copolymerized polyamide particles (EMS-CHEMIE (Japan) Ltd., glass transition temperature: 15°C, median value of particle size distribution (D50): 27 µm)

### (Different components)

- VINYLEC E: Polyvinyl formal (JNC)
- PES5003P: Polyether sulfone (Sumitomo Chemical Co., Ltd.)

### <Example 1>

### (Preparation of constituent element (B))

As a raw material composition (also referred to as a masterbatch) 1a for a constituent element (B), 49 parts by mass of YD-128, 24 parts by mass of jER1002, 25 parts by mass of YD-952, and 2.5 parts by mass of VINYLEC E were added to a glass flask. Using an oil bath set at a temperature of 140°C to 160°C, the raw material composition 1a was mixed while being heated until the raw material composition 1a became uniform. Incidentally, as a raw material composition 1b for the constituent element (B), 12 parts by mass of YD-128, 6 parts by mass of DICY15 and 4 parts by mass of DCMU99 were added to the container of a planetary centrifugal mixer, and the raw material composition 1b was defoamed by stirring. Furthermore, DICY15 and DCMU99 in the raw material composition 1b were uniformly dispersed by YD-128 with a roll mill. To the container of a planetary mixer, 100.5 parts by mass of the raw material composition 1a in the glass flask naturally cooled until the temperature became approximately 60°C and 22 parts by mass of the above-described raw material composition 1b were added, the jacket temperature was set to 60°C to 65°C, and the individual compositions were mixed until becoming uniform, thereby preparing the constituent element (B).

### (Preparation of mixture (BC))

35 parts by mass of ARX15 was added to 122.5 parts by mass of the prepared constituent element (B). Therefore, the content of ARX15 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg of Example 1 was produced by the method (α) disclosed in the embodiment.

The mixture (BC) was applied to the surface of release paper in a uniform thickness using a film coater to produce 32 g/m² of a resin film (F). The produced resin film (F) was attached to both surfaces of a constituent element (A) formed into a sheet shape by aligning a plurality of TR50S and pressurized while being heated at 100°C to impregnate the constituent element (A) with the constituent element (B), thereby producing a prepreg. At this time, in the prepreg, the constituent element (C) contained in the constituent element (B) was filtered by the constituent element (A) and was thereby unevenly distributed in the vicinity of the surface of the prepreg.

### (Manufacturing of fiber-reinforced composite article)

The obtained prepreg was cut into 350 mm × 350 mm with an automatic cutting device, and the cut prepregs were laminated in a configuration of "+ 45/0/- 45/90" 4s, thereby producing a prepreg laminate. The prepreg laminate was covered with a vacuum bag, subjected to a vacuum bag treatment, next, heated up to 150°C at a heating rate of 4 °C/min using an autoclave, and maintained in a state of 150°C for 20 minutes. After that, the prepreg laminate was slowly cooled in the autoclave until the temperature became 50°C or lower, thereby producing an evaluation molded plate. From the start of heating to the end of heating, the pressure in the autoclave was set to 0.6 MPa.

### (Measurement of glass transition temperature)

A test piece having a length of 55 mm and a width of 12.5 mm was cut out from the evaluation molded plate. The storage elastic modulus E' and the loss elastic modulus E" in a bending mode were measured using a dynamic viscoelasticity measuring instrument (manufactured by TA Instruments Japan Inc., "DMA-Q800") according to ASTM D7028 under conditions of a frequency of 1 Hz, a heating rate of 5 °C/min, and a measurement temperature range of 30°C to 250°C. The maximum value of the ratio (E"/E' = tan δ) of the loss elastic modulus E" to the storage elastic modulus E' was regarded as the glass transition temperature.

### (Impact resistance test)

A 150 mm × 100 mm test piece was cut out from the evaluation molded plate and placed still in an instrumented impact tester. The potential energy was set to 26 J using an iron impactor provided with a hemisphere having a radius of 8 mm at the tip, and the iron impactor was dropped to the center of the test piece. The test piece was irradiated with 22 dB of ultrasonic waves, and a damaged portion was detected. The damaged portion was projected, and the projected area S was measured. Absorption energy E was defined as the area surrounded by the load-displacement curve.

### <Example 2>

### (Preparation of constituent element (B))

As a raw material composition 2a for a constituent element (B), 38 parts by mass of YD-128, 5 parts by mass of YX7400, 27 parts by mass of jER1002, 28 parts by mass of YD-952, and 2.8 parts by mass of VINYLEC E were added to a glass flask. Using an oil bath set at a temperature of 140°C to 160°C, the raw material composition 2a was mixed while being heated until the raw material composition 2a became uniform.

The raw material composition 2b for the constituent element (B) was obtained by the same order and formulation as 1b in Example 1. To the container of a planetary mixer, 100.8 parts by mass of the raw material composition 2a in the glass flask naturally cooled until the temperature became approximately 60°C and 22 parts by mass of the above-described raw material composition 2b were added, the jacket temperature was set to 60°C to 65°C, and the individual compositions were mixed until becoming uniform, thereby obtaining the constituent element (B) used in Example 2.

### (Preparation of mixture (BC))

35 parts by mass of ARX15 was added to 122.8 parts by mass of the prepared constituent element (B). Therefore, the content of ARX15 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg used in Example 2 was produced by the same method (α) as in Example 1 except that the mixture (BC) was changed. Table 1 shows the composition and production method of the prepreg.

### (Manufacturing of fiber-reinforced composite article)

An evaluation molded plate of Example 2 was produced by the same method as the evaluation molded plate in Example 1. Table 1 shows the evaluation results of the evaluation molded plate of Example 2.

### <Example 3>

### (Preparation of constituent element (B))

A constituent element (B) used in Example 3 was obtained by the same order and formulation as in Example 1.

### (Preparation of mixture (BC))

35 parts by mass of ARX30 was added to 122.5 parts by mass of the prepared constituent element (B). Therefore, the content of ARX30 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg used in Example 3 was produced by the same method (α) as in Example 1 except that the mixture (BC) was changed. Table 1 shows the composition and production method of the prepreg.

### (Manufacturing of fiber-reinforced composite article)

An evaluation molded plate of Example 3 was produced by the same method as the evaluation molded plate in Example 1. Table 1 shows the evaluation results of the evaluation molded plate of Example 3.

### <Comparative Example 1>

### (Preparation of constituent element (B))

As a raw material composition 3a for a constituent element (B), 49 parts by mass of YD-128, 24 parts by mass of jER1002, 25 parts by mass of YD-952, and 2.5 parts by mass of VINYLEC E were added to a glass flask. Using an oil bath set at a temperature of 140°C to 160°C, the raw materials were mixed while being heated until the raw materials became uniform.

Incidentally, as a raw material composition 3b for the constituent element (B), 12 parts by mass of YD-128, 6 parts by mass of DICY15 and 4 parts by mass of DCMU99 were added to the container of a planetary centrifugal mixer, and the raw material composition 4b was defoamed by stirring. Furthermore, DICY15 and DCMU99 in the raw material composition 3b were uniformly dispersed in YD-128 with a roll mill. To the container of a planetary mixer, 100.5 parts by mass of the raw material composition 3a in the glass flask naturally cooled until the temperature became approximately 60°C and 22 parts by mass of the above-described raw material composition 3b were added, the jacket temperature was set to 60°C to 65°C, and the individual compositions were mixed until becoming uniform, thereby preparing the constituent element (B) used in Comparative Example 1.

### (Preparation of mixture (BC))

35 parts by mass of BM30X-12 was added to 122.5 parts by mass of the prepared constituent element (B). Therefore, the content of BM30X-12 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg used in Comparative Example 1 was produced by the same method (α) as in Example 1 except that the obtained mixture (BC) was changed.

### (Manufacturing of fiber-reinforced composite article)

An evaluation molded plate of Comparative Example 1 was produced by the same method as the evaluation molded plate in Example 1. The Comparative Example 1 evaluation molded plate was evaluated. The results are shown in Table 1.

### <Comparative Example 2>

### (Preparation of constituent element (B))

A constituent element (B) was prepared in the same manner as in Example 2.

### (Preparation of mixture (BC))

35 parts by mass of MBX15 was added to 122.5 parts by mass of the prepared constituent element (B). Therefore, the content of MBX15 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg used in Comparative Example 2 was produced by the same method (α) as in Comparative Example 1.

### (Manufacturing of fiber-reinforced composite article)

An evaluation molded plate of Comparative Example 2 was produced by the same method as the evaluation molded plate in Example 1. The evaluation molded plate of Comparative Example 2 was evaluated. The results are shown in Table 1.

### <Comparative Example 3>

### (Preparation of constituent element (B))

A constituent element (B) was prepared by the same method as in Comparative Example 1.

### (Preparation of mixture (BC))

35 parts by mass of 2A P0-35 was added to 122.5 parts by mass of the prepared constituent element (B). Therefore, the content of 2A P0-35 is 22.2% by mass with respect to a total of 100% by mass of the constituent element (B) and the constituent element (C). A mixture (BC) of the constituent element (B) and the constituent element (C) was prepared by setting the jacket temperature of the planetary mixer to 60°C to 70°C and mixing the elements until the elements became uniform.

### (Production of prepreg)

A prepreg used in Comparative Example 3 was produced by the same method (α) as in Comparative Example 1.

### (Manufacturing of fiber-reinforced composite article)

An evaluation molded plate of Comparative Example 3 was produced by the same method as the evaluation molded plate in Example 1. Table 1 shows the evaluation results of the evaluation molded plate of Comparative Example 3.

### <Comparative Example 4>

### (Preparation of constituent element (B))

As a raw material composition 4a for a constituent element (B), 41 parts by mass of YD-128, 29 parts by mass of jER1002, 30 parts by mass of YD-952, and 3 parts by mass of VINYLEC E were added to a glass flask. Using an oil bath set at a temperature of 140°C to 160°C, the raw materials were mixed while being heated until the raw materials became uniform.

Incidentally, as a raw material composition 4b for the constituent element (B), 12 parts by mass of YD-128, 6 parts by mass of DICY15 and 4 parts by mass of DCMU99 were added to the container of a planetary centrifugal mixer, and the raw material composition 4b was stirred. Furthermore, DICY15 and DCMU99 in the raw material composition 4b were uniformly dispersed by YD-128 with a roll mill. To the container of a planetary mixer, 103 parts by mass of the raw material composition 4a in the glass flask naturally cooled until the temperature became approximately 60°C and 22 parts by mass of the above-described raw material composition 4b were added, the jacket temperature was set to 60°C to 65°C, and the individual compositions were mixed until becoming uniform, thereby preparing the constituent element (B) used in Comparative Example 4.

### (Production of prepreg)

A prepreg used in Comparative Example 4 was produced by the same method (α) as in Comparative Example 1 using only the constituent element (B).

### (Manufacturing of fiber-reinforced composite article)

An evaluation molded plate of Comparative Example 4 was produced by the same method as the evaluation molded plate in Example 1. Table 1 shows the evaluation results of the evaluation molded plate of Comparative Example 4.

### <Comparative Example 5>

A constituent element (B) was obtained by the same method as in Comparative Example 4 except that the raw materials and the formulation ratio were changed as shown in Table 1.

### (Production of prepreg)

A prepreg used in Comparative Example 5 was produced by the same method (α) as in Comparative Example 1 using only the constituent element (B).

### (Manufacturing of fiber-reinforced composite article)

An evaluation molded plate of Comparative Example 5 was produced by the same method as the evaluation molded plate in Example 1. Table 1 shows the evaluation results of the evaluation molded plate of Comparative Example 5.

### <Comparative Example 6>

A constituent element (B) was obtained by the same method as in Comparative Example 4 except that the raw materials and the formulation ratio were changed as shown in Table 1.

### (Production of prepreg)

A prepreg used in Comparative Example 6 was produced by the same method (α) as in Comparative Example 1 using only the constituent element (B).

### (Manufacturing of fiber-reinforced composite article)

An evaluation molded plate of Comparative Example 6 was produced by the same method as the evaluation molded plate in Example 1. Table 1 shows the evaluation results of the evaluation molded plate of Comparative Example 6.

**[Table 1]**

| | | | | Example 1 | Example 2 | Example 3 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|
| Constituent element (A) | | TR50S | | Used | Used | Used | Used | Used | Used | Used | Used | Used |
| Constituent element (B) | Epoxy resin | YD-128 | | 61 | 50 | 61 | 61 | 61 | 61 | 53 | 35 | 35 |
| | | YX7400 | | - | 5 | - | - | - | - | - | - | - |
| | | jER1002 | | 24 | 27 | 24 | 24 | 24 | 24 | 29 | - | - |
| | | YDPN-638 | | - | - | - | - | - | - | - | 25 | 25 |
| | | YD-952 | | 25 | 28 | 25 | 25 | 25 | 25 | 30 | 42.5 | 42.5 |
| | | YD-128 | | - | - | - | - | - | - | - | - | - |
| | Dicyandiamide | DICY15 | | 6 | 6 | 6 | 6 | 6 | 6 | 6 | 6.1 | 2 |
| | Urea compound | DCMU99 | | 4 | 4 | 4 | 4 | 4 | 4 | 4 | - | - |
| | Urea compound | OMICURE 94 | | - | - | - | - | - | - | - | 4.6 | - |
| | Imidazole | 2MZA-PW | | - | - | - | - | - | - | - | - | 5 |
| | Different components | PES5003P | | - | - | - | - | - | - | - | 3 | 3 |
| | | VINYLEC E | | 2.5 | 2.8 | 2.5 | 2.5 | 2.5 | 2.5 | 3 | - | - |
| Constituent element (C) | | ARX15 (Tg: -26°C) | | 35 | 35 | - | - | - | - | - | - | - |
| | | ARX30 (Tg: -26°C) | | - | - | 35 | - | - | - | - | - | - |
| Particles other than constituent element (C) | | BM30X-12 (Tg: Undetectable) | | - | - | - | 35 | - | - | - | - | - |
| | | MBX15 (Tg: 75°C) | | - | - | - | - | 35 | - | - | - | - |
| | | 2A P0-35 (Tg: 15°C) | | - | - | - | - | - | 35 | - | - | - |
| Average particle size of constituent element (C) | | | µm | 15 | 15 | 30 | 12 | 15 | 27 | - | - | - |
| Prepreg | | Fiber basis weight | g/m² | 120 | 120 | 120 | 120 | 120 | 120 | 120 | 120 | 120 |
| | | Content of matrix resin | %by mass | 35 | 35 | 35 | 35 | 35 | 35 | 35 | 35 | 35 |
| | | Content of constituent element (C) with respect to total of 100% by mass of constituent element (B) and constituent element (C) | %by mass | 22.2 | 22.2 | 22.2 | 22.2 | 22.2 | 22.2 | 0.0 | 0.0 | 0.0 |
| Fiber-reinforced composite article | | Curing temperature | °C | 150 | 150 | 150 | 150 | 150 | 150 | 150 | 150 | 150 |
| | | Glass transition temperature E' onset | °C | 126 | 113 | 114 | 114 | 124 | 41 | 127 | 143 | 178 |
| | | Glass transition temperature tan δ peak | °C | 138 | 129 | 133 | 132 | 138 | 53 | 141 | 158 | 201 |
| | | Projected area S | mm² | 194 | 137 | 378 | 9021 | 1138 | 127 | 563 | 894 | 1106 |
| | | Absorption energy E | J | 3.05 | 2.98 | 3.13 | 3.87 | 3.78 | 3.04 | 3.33 | 4.00 | 4.09 |

All of the fiber-reinforced composite articles of Examples 1 to 3 in which the constituent element (C) was contained and the majority of the constituent element (C) was present between the layers of the constituent element (A) were found out to have heat resistance of 100°C or higher and be excellent in terms of the impact resistance. On the other hand, all of the fiber-reinforced composite articles of Comparative Examples 1 to 6 comprising no constituent element (C) were found out to be poor in the impact resistance or the heat resistance.

### [Industrial Applicability]

According to the prepreg of the present invention, a fiber-reinforced composite article in which interlayer peeling at the time of a point impact is suppressed can be obtained.

The fiber-reinforced composite article of the present invention is excellent in terms of the resistance at the time of a point impact.

According to the method for manufacturing a fiber-reinforced composite article of the present invention, a fiber-reinforced composite article having excellent resistance at the time of a point impact can be obtained.

## Claims

1. A prepreg,
wherein a projected area of a damaged portion of a cured product obtained by curing the prepreg under the following curing conditions that is measured by the following test 1 is 400 mm² or less, and
a maximum value of tan δ of the cured product that is measured by the following test 2 is observed at 100°C or higher,
curing conditions: the prepregs are laminated in a constitution of "+45/0/-45/90" 4s and cured at 0.6 MPa and 150°C for 30 minutes using an autoclave,
test 1: a panel made of the cured product is placed, an iron impactor provided with a hemisphere having a radius of 8 mm at a tip is dropped to a center of the panel with a potential energy of 26 J, a damaged portion on the panel that is formed by the dropping is detected at a sound pressure of 22 dB using a transmission-type ultrasonic flaw detector, and an area of the detected damaged portion is measured and regarded as the projected area of the damaged portion,
test 2: a storage elastic modulus E' and a loss elastic modulus E" are measured using a dynamic viscoelasticity measuring instrument under conditions of a frequency of 1 Hz, a heating rate of 5 °C/min, and a measurement temperature range of 30°C to 250°C, and a ratio (E"/E') of the loss elastic modulus E" to the storage elastic modulus E' is regarded as the tan δ.

2. The prepreg according to Claim 1 comprising:
the following constituent element (A), constituent element (B), and constituent element (C),
constituent element (A): reinforcing fiber substrate,
constituent element (B): epoxy resin composition,
constituent element (C): particles.

3. The prepreg according to Claim 2,
wherein the constituent element (C) is present on an outermost surface of the prepreg.

4. The prepreg according to Claim 2 or 3,
wherein the constituent element (C) is thermoplastic resin particles.

5. The prepreg according to any one of Claims 2 to 4,
wherein the constituent element (C) is particles containing a polyacrylic acid ester.

6. The prepreg according to any one of Claims 2 to 5,
wherein the constituent element (C) is crosslinked body particles of a polyacrylic acid ester.

7. The prepreg according to any one of Claims 2 to 6,
wherein a median value (D50) of a particle size distribution of the particles of the constituent element (C) is 12 µm or more and 21 µm or less.

8. The prepreg according to any one of Claims 2 to 7,
wherein the constituent element (B) contains dicyandiamide.

9. The prepreg according to any one of Claims 2 to 8,
wherein the constituent element (B) contains an epoxy resin, and a glass transition temperature of a cured product of the epoxy resin is -20°C or lower.

10. The prepreg according to any one of Claims 2 to 9,
wherein the constituent element (A) is a carbon fiber substrate.

11. A fiber-reinforced composite article obtained by laminating at least one prepreg according to any one of Claims 1 to 10 and a prepreg.

12. A prepreg comprising:
the following constituent element (A), constituent element (B), and constituent element (C2),
wherein the constituent element (C2) is present on an outermost surface of the prepreg,
constituent element (A): reinforcing fiber substrate,
constituent element (B): epoxy resin composition,
constituent element (C2): polymer having a glass transition temperature of 10°C or lower that is observed under the following measurement conditions,
measurement conditions of the glass transition temperature of the constituent element (C2): the prepreg is cut into 100 mm × 100 mm and washed with 50 ml of N-methylpyrrolidone (NMP), then, a washing liquid is filtered with filter paper, after this operation is repeated 5 times with the same filter paper, the filter paper is washed with acetone and dried in an oven at 100°C for 30 minutes, 5 to 10 mg of a residue is removed from the filter paper and scanned by differential scanning calorimetry (DSC) from -50°C to 300°C at 10 °C/min, and an onset value at which a baseline changes is regarded as the glass transition point.

13. The prepreg according to Claim 12,
wherein the constituent element (C2) contains a polyacrylic acid ester.

14. The prepreg according to Claim 12 or 13,
wherein the constituent element (C2) is particles, and the particles are unevenly distributed on the outermost surface of the prepreg.

15. The prepreg according to any one of Claims 12 to 14,
wherein the constituent element (C2) is crosslinked body particles.

16. The prepreg according to any one of Claims 12 to 15,
wherein the constituent element (A) is a carbon fiber substrate.

17. The prepreg according to any one of Claims 12 to 16 that is for a tubular body.

18. A tubular body obtained by curing the prepreg according to any one of Claims 12 to 16.

19. A method for manufacturing a fiber-reinforced composite article, comprising:
heat-molding a prepreg containing the following constituent element (A), constituent element (B), and constituent element (C2) at 100°C or higher and 150°C or lower,
constituent element (A): reinforcing fiber substrate,
constituent element (B): epoxy resin,
constituent element (C2): polymer having a glass transition temperature of 10°C or lower that is observed under the following measurement conditions,
measurement conditions of the glass transition temperature of the constituent element (C2): the prepreg is cut into 100 mm × 100 mm and washed with 50 ml of N-methylpyrrolidone (NMP), then, a washing liquid is filtered with filter paper, after this operation is repeated 5 times with the same filter paper, the filter paper is washed with acetone and dried in an oven at 100°C for 30 minutes, 5 to 10 mg of a residue is removed from the filter paper and scanned by differential scanning calorimetry (DSC) from -50°C to 300°C at 10 °C/min, and an onset value at which a baseline changes is regarded as the glass transition point.

20. The method for manufacturing a fiber-reinforced composite article according to Claim 19,
wherein a method for molding the prepreg is internal pressure molding, autoclave molding, or press molding.
